# FASCICULE DE BREVET EUROPEEN

(11) **EP 3 552 939 B1**
(45) Date de publication et mention de la délivrance du brevet: **04.11.2020**
(21) Numéro de dépôt: 19164906.0
(22) Date de dépôt: 25.03.2019
(51) Int. Cl.: B62K 21/12, B62K 21/16

(54) **ASSEMBLAGE AÉRODYNAMIQUE POUR CINTRE DE VÉLO**
AERODANYMISCHE ANORDNUNG FÜR FAHRRADLENKER
AERODYNAMIC ASSEMBLY FOR BICYCLE HANDLEBARS

(30) Priorité: 12.04.2018 FR 1853217
(43) Date de publication de la demande: 16.10.2019
(73) Titulaire: Look Cycle International, 58000 Nevers (FR)
(72) Inventeur: BIGARD, Pierre, 60110 MERU (FR)
(74) Mandataire: Ipsilon

(56) Documents cités:
- CN-Y- 201 186 718
- DE-U1-202013 004 765
- US-A1- 2003 150 292
- US-A1- 2005 132 839
- US-A1- 2006 230 872
- US-A1- 2013 039 690
- US-B1- 8 359 713
- US-B1- 9 415 825

## Description

La présente invention concerne de manière générale les cintres de vélos, par exemple de contre-la-montre ou de triathlon, et plus précisément les prolongateurs qui peuvent être utilisés pour les cintres de tels vélos.

Un cintre pour vélo de contre-la-montre permet au cycliste d'avoir deux positions différentes, une première position avec les mains placées sur les poignées du cintre, généralement utilisée par le cycliste lors du démarrage ou pour forcer, et une deuxième position avec les avant-bras en appui sur des repose-bras et les mains placées sur des prolongateurs. Cette deuxième position est utilisée par le cycliste pour maintenir une vitesse de croisière tout en favorisant l'abaissement du buste et le rapprochement des mains et des coudes du cycliste, améliorant ainsi l'aérodynamisme.

Un tel cintre pour vélo de contre-la-montre comporte généralement, en plus de la partie cintre qui possède classiquement une barre transversale fixée au vélo, généralement à l'aide d'une potence, avec une zone de prise en main (poignée) à chacune de ses deux extrémités:
- deux prolongateurs montés sur le cintre, de part et d'autre de la potence, qui se terminent chacun par une zone de prise en main;
- deux repose-bras associés chacun à un prolongateur, pour servir d'appui aux avant-bras du cycliste lorsque ce dernier a ses mains sur les zones de prise en main des prolongateurs.

Les modes de réalisations connus peuvent être essentiellement regroupés en quatre types :
Selon un premier type de réalisation, les deux prolongateurs utilisés pour un même cintre d'une part, et les deux repose-bras associés d'autre part, sont des pièces distinctes les unes des autres. Dans ce cas, les prolongateurs sont généralement montés réglables par rapport au cintre. Ainsi, des variations d'écartement entre les deux prolongateurs peuvent par exemple être obtenues en fixant les prolongateurs à différents points sur la largeur du cintre. Les prolongateurs peuvent également être montés rotatifs sur le cintre de façon à permettre le réglage de leur inclinaison par rapport au cintre. Une ou plusieurs cales de hauteurs différentes peuvent être utilisées au point de fixation du cintre et de chaque prolongateur pour permettre un réglage en hauteur des prolongateurs par rapport au cintre. Pour ce type de prolongateurs, se présentant généralement sous la forme d'un tube allongé de forme droite, en S ou coudée, la longueur du prolongateur par rapport à son point de fixation sur le cintre ne peut généralement être réglée qu'en coupant le tube du prolongateur. Selon les modes de réalisations connus, les repose-bras sont quant à eux fixés soit sur le cintre, soit sur les prolongateurs, éventuellement par l'intermédiaire de cales pour un réglage en hauteur.

US 2005/132839 A1 divulgue les caractéristiques du préambule de la revendication 1.

A titre d'exemple, le document EP 2 402 240 décrit une paire de prolongateurs dans laquelle chaque prolongateur se fixe sur la barre transversale du cintre de vélo, et un repose-bras vient se fixer sur chaque prolongateur, en retrait par rapport à la barre transversale du cintre.

Un deuxième type de réalisation recouvre les pièces monoblocs pour lesquelles chaque prolongateur vient dans le prolongement de son repose-bras associé au sein d'une même pièce qui vient se fixer sur le cintre. Dans les modes de réalisation connus, seuls l'inclinaison de chaque prolongateur par rapport à la barre transversale du cintre et l'écartement entre les deux prolongateurs peuvent être réglés, mais pas la longueur des prolongateurs.

Un troisième type de réalisation, décrit par exemple dans le document US 2010/0326232, recouvre le cas d'une platine monobloc dont la forme en H intègre deux prolongateurs et deux repose-bras associés, la platine étant apte à être fixée sur la barre transversale du cintre. Dans ce type de platine, aucun réglage en écartement des prolongateurs ou de la longueur des prolongateurs n'est possible.

Plus récemment enfin, un quatrième type de réalisation sur la base d'un cintre monobloc intégrant des poignées traditionnelles, des repose-bras et des prolongateurs dans la continuité des repose-bras, a été proposé. Le cintre est conçu sur mesure pour convenir à un seul cycliste, puis est produit par impression 3D. Aucun réglage a posteriori n'est en conséquence possible. Un tel cintre monobloc est beaucoup plus ergonomique et aérodynamique que les solutions précédentes, mais ne peut être adapté à un large nombre de cyclistes.

La présente invention a pour but de proposer un assemblage comportant deux dispositifs distincts, dont la structure confère un aérodynamisme amélioré par rapport aux solutions existantes, tout en permettant notamment un réglage en longueur permettant de convenir à un grand nombre de cyclistes de morphologies différentes.

Plus précisément, l'invention a pour premier objet un assemblage aérodynamique pour cintre de vélo, l'assemblage comportant deux dispositifs prolongateurs distincts formant un premier dispositif prolongateur gauche et un deuxième dispositif prolongateur droit, **caractérisé en ce que** chacun des deux dispositifs prolongateurs comprend:
- une première partie formant repose-bras, apte à être fixée sur une barre transversale d'un cintre de vélo en s'étendant longitudinalement vers l'avant et comportant une extension longitudinale formant une portion d'extrémité libre, une surface supérieure de la première partie avec son extension longitudinale formant une surface d'accueil pour une partie d'avant-bras d'un cycliste ; et
- une deuxième partie formant prolongateur, apte à être fixée, de manière amovible et dans le prolongement de ladite première partie, à ladite portion d'extrémité libre, la deuxième partie formant prolongateur étant apte à coulisser longitudinalement relativement à ladite extension longitudinale pour permettre un réglage d'une distance séparant une extrémité libre de la deuxième partie formant prolongateur de la première partie formant repose-bras.

Outre les caractéristiques principales qui viennent d'être mentionnées dans le paragraphe précédent, l'assemblage selon l'invention peut présenter une ou plusieurs caractéristiques complémentaires parmi les suivantes :
- pour chacun des deux dispositifs prolongateurs, une surface supérieure de la deuxième partie formant prolongateur est de préférence sensiblement dans le prolongement de la surface supérieure de la première partie de façon à augmenter longitudinalement la surface d'accueil pour chaque avant-bras d'un cycliste ;
- pour chacun des deux dispositifs prolongateurs, la surface supérieure de la première partie et la surface supérieure de la deuxième partie formant prolongateur peuvent être sensiblement planes, ou concaves pour épouser la forme d'un avant-bras ;
- pour chacun des deux dispositifs prolongateurs, une surface inférieure de la deuxième partie formant prolongateur est de préférence sensiblement dans le prolongement d'une surface inférieure de l'extension longitudinale, et la surface inférieure de la deuxième partie formant prolongateur et la surface inférieure l'extension longitudinale sont de préférence convexes ;
- pour chacun des deux dispositifs prolongateurs, la deuxième partie formant prolongateur et ladite extension longitudinale peuvent avoir avantageusement des sections complémentaires par exemple sensiblement triangulaires ;
- pour chacun des deux dispositifs prolongateurs, la deuxième partie formant prolongateur peut être apte à être fixée et à coulisser longitudinalement à l'intérieur de ladite extension longitudinale ; en variante, la deuxième partie formant prolongateur est apte à être fixée et à coulisser longitudinalement sur l'extérieur de ladite extension longitudinale ;
- pour chacun des deux dispositifs prolongateurs, la première partie formant repose-bras est configurée de préférence pour être fixée sur un cintre de vélo par l'intermédiaire d'un système de réglage ;
- chaque système de réglage peut être apte à effectuer au moins un réglage parmi les réglages suivants :
   - un réglage par translation haut/bas permettant un ajustement de la hauteur de chaque première partie formant repose-bras par rapport à la barre transversale du cintre;
   - un réglage par translation avant/arrière permettant un ajustement de chaque première partie formant repose-bras plus ou moins en retrait ou en avant de la barre transversale du cintre;
   - un réglage par translation gauche/droite permettant un ajustement de l'écartement des premières parties formant repose-bras le long de la barre transversale du cintre;
   - un réglage par rotation dans un plan horizontal permettant l'ajustement d'un angle de pincement entre les deux dispositifs prolongateurs;
   - un réglage par rotation permettant l'ajustement d'un angle d'appui des avant-bras par rapport à l'horizontale.
- chacun des deux dispositifs prolongateurs comporte de préférence un revêtement en mousse apte à recouvrir de façon amovible la surface d'accueil ;
- pour chacun des deux dispositifs prolongateurs, une extrémité de la deuxième partie formant prolongateur est de préférence aplatie et présente une forme ergonomique sur laquelle une paume de main d'un cycliste peut se mettre en appui ;
- chaque extrémité aplatie peut être munie d'un trou traversant permettant une fixation amovible d'une poignée ;
- chaque poignée est de préférence montée pivotante ;
- chaque poignée peut comporter une partie de prise en main et des pattes de fixation en partie basse, ladite partie de prise en main faisant un angle avec les pattes de fixation ;
- les poignées peuvent être interchangeables pour ajuster un angle de pincement entre ces poignées.

L'invention a également pour objet un cintre de vélo caractérisé en ce qu'il comprend un assemblage selon le premier objet.

L'invention sera mieux comprise à la lecture de la description qui suit d'un mode de réalisation préféré mais nullement limitatif d'un assemblage aérodynamique conforme à l'invention, faite en référence aux figures annexées, dans lesquelles :
- la figure 1 est une vue éclatée des différents composants d'un assemblage aérodynamique pour cintre de vélo conforme au mode de réalisation préféré de l'invention ;
- la figure 2 représente le cintre de vélo et l'assemblage aérodynamique de la figure 1 en position montée ;
- la figure 3 est une vue agrandie d'une partie de la figure 1 ;
- les figures 4 et 5 illustrent en perspective et en élévation un exemple de position des avant-bras et mains d'un cycliste sur l'assemblage aérodynamique équipant le cintre de la figure 2 ;
- la figure 6 est une vue en coupe selon le plan AA de la figure 5 ;
- la figure 7 est une vue en coupe selon le plan BB de la figure 5 ;
- les figures 8a et 8b illustrent en vue de face deux exemples de positionnement de poignées des dispositifs prolongateurs montés sur le cintre de la figure 1 ;
- la figure 9 est une vue partiellement éclatée montrant les possibilités de réglages en hauteur de l'assemblage aérodynamique sur le cintre de vélo de la figure 1 ;
- les figures 10a et 10b illustrent, en vue de dessus, deux exemples de réglage avant/arrière des dispositifs prolongateurs de la figure 1 ;
- la figure 11 est une vue de dessus agrandie d'une partie d'un dispositif prolongateur de la figure 1 ;
- la figure 12 illustre, en vue de dessus, un exemple de réglage de l'angle de pincement entre deux dispositifs prolongateurs ;
- la figure 13 est une vue agrandie d'un support de berceau de la figure 1 ;
- la figure 14a illustre en vue de dessus et arrière un exemple de réglage de l'écartement entre les deux dispositifs prolongateurs de la figure 1 ;
- la figure 14b illustre en vue de dessus et arrière un autre exemple de réglage de l'écartement entre les deux dispositifs prolongateurs de la figure 1 ;
- la figure 15 est une vue agrandie d'une partie de la figure 1, représentative d'une possibilité de réglage de l'angle d'appui des avant-bras.

Dans la suite de la description, et à moins qu'il n'en soit disposé autrement, les éléments communs à l'ensemble des figures portent les mêmes références.

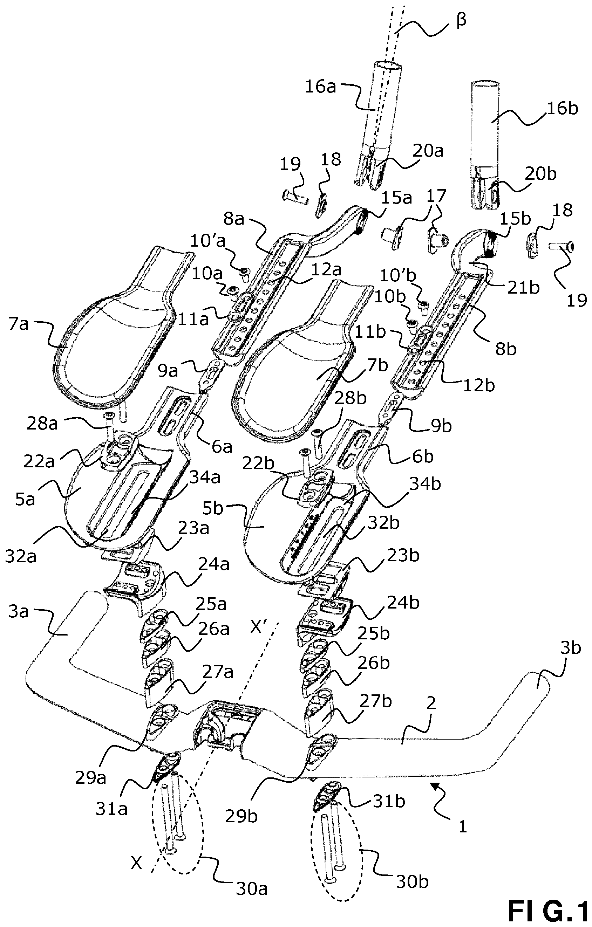

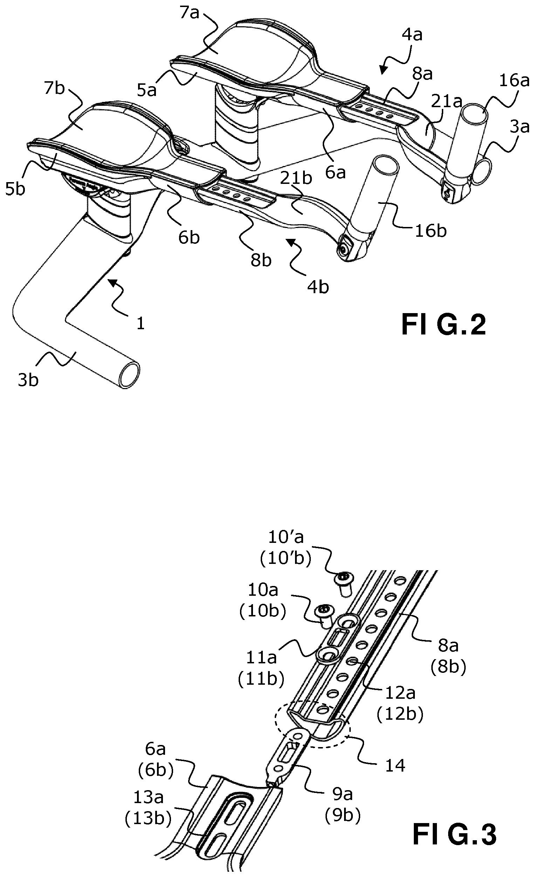

Les figures 1 et 2 représentent un assemblage aérodynamique pour un cintre 1 de vélo, respectivement en vue éclatée et en position montée. Le cintre 1 de vélo comporte classiquement une barre transversale 2 dont la partie centrale vient se fixer au vélo, généralement à l'aide d'une potence. La barre transversale 2 se prolonge par une zone de prise en main ou poignée 3a, 3b à chacune de ses deux extrémités. Ces poignées s'étendent vers l'avant du vélo, sensiblement dans la direction longitudinale du vélo matérialisée sur la figure par l'axe longitudinal XX'. Dans la suite et sauf exception expressément indiquée, les indices « a » utilisés dans les signes de référence aux figures sont représentatifs des parties destinées à être situées à gauche par rapport à l'axe longitudinal XX', et les indices « b » utilisés dans les signes de référence aux figures sont représentatifs des parties destinées à être situées à droite par rapport à l'axe longitudinal XX'.

L'assemblage aérodynamique comporte, comme particulièrement visible sur la figure 2, deux dispositifs prolongateurs distincts, à savoir un premier dispositif prolongateur gauche 4a et un deuxième dispositif prolongateur droit 4b.

Conformément à l'invention, chacun des deux dispositifs prolongateurs gauche 4a et droite 4b comprend une première partie 5a, 5b formant repose-bras, apte à être fixée sur la barre transversale 2 du cintre 1 de vélo en s'étendant longitudinalement vers l'avant. Chaque première partie 5a, 5b comporte une extension longitudinale 6a, 6b formant une portion d'extrémité libre avant montage (voir figure 1). La surface supérieure de la première partie 5a, 5b avec son extension longitudinale 6a, 6b forme une surface d'accueil pour une partie d'avant-bras gauche ou droit d'un cycliste. Cette surface d'accueil peut être avantageusement recouverte d'un revêtement 7a, 7b en mousse, de même forme, pour apporter du confort au cycliste, de préférence amovible comme représenté sur la figure 1 de manière à être aisément changé et/ou nettoyé.

Chacun des deux dispositifs prolongateurs gauche 4a et droite 4b comprend en outre une deuxième partie 8a, 8b formant prolongateur, apte à être fixée, de manière amovible et dans le prolongement de la première partie 5a, 5b, à la portion d'extrémité libre de l'extension longitudinale 6a, 6b.

Les premières parties 5a, 5b formant repose-bras et les deuxièmes parties 8a, 8b formant prolongateurs sont de préférence réalisées en fibre de carbone.

La deuxième partie 8a, 8b formant prolongateur est en outre apte à coulisser longitudinalement relativement à l'extension longitudinale 6a, 6b pour permettre, comme détaillé dans la suite, un réglage de la distance séparant une extrémité libre de la deuxième partie 8a, 8b formant prolongateur de la première partie 5a, 5b formant repose-bras. Dans le mode de réalisation représenté sur les figures, la deuxième partie 8a, 8b formant prolongateur est apte à être fixée et à coulisser longitudinalement à l'intérieur de l'extension longitudinale 6a, 6b. Néanmoins, selon des variantes non représentées, on peut prévoir que la deuxième partie formant prolongateur soit apte à être fixée et à coulisser longitudinalement sur l'extérieur de l'extension longitudinale.

Comme plus particulièrement visible sur les figures 1 et 3, chaque deuxième partie 8a, 8b formant prolongateur peut être fixée à sa première partie associée 5a, 5b formant repose-bras par un système de vis et platines. Plus précisément, une platine inférieure 9a, 9b, équipée de deux trous traversant taraudés, est logée dans une première extrémité creuse de chaque deuxième partie 8a, 8b formant prolongateur, et deux vis 10a, 10'a, 10b, 10'b passent au travers d'une platine supérieure 11a, 11b et de l'extension longitudinale 6a, 6b pour aller se visser dans les trous traversant taraudés de la platine inférieure 9a, 9b. Plusieurs perçages 12a, 12b régulièrement espacés d'une distance correspondant à la distance séparant les trous traversant taraudés de la platine inférieure 9a, 9b sont avantageusement prévus au travers de la surface supérieure de la deuxième partie 8a, 8b formant prolongateur. Chaque cycliste peut ainsi effectuer un premier réglage de la longueur d'insertion qui soit adaptée à la morphologie de ses avant-bras. Pour ce premier réglage, il peut être nécessaire de recouper au préalable l'extrémité des deuxièmes parties 8a, 8b formant prolongateurs entre deux perçages consécutifs 12a, 12b. Un ajustement en longueur plus fin peut être avantageusement obtenu en prévoyant, comme montré sur la figure 3, que la platine supérieure 11a, 11b puisse translater longitudinalement à l'intérieur d'une ouverture de forme oblongue 13a, 13b s'étendant longitudinalement sur la partie supérieure de l'extension longitudinale 6a, 6b.

Par ailleurs, pour chacun des deux dispositifs 4a, 4b prolongateurs, la surface supérieure de la deuxième partie 8a, 8b formant prolongateur est de préférence sensiblement dans le prolongement de la surface supérieure de la première partie 5a, 5b. Cela permet d'augmenter longitudinalement la surface d'accueil pour chaque avant-bras d'un cycliste.

Dans une variante de réalisation non représentée, la surface supérieure de la première partie 5a, 5b et la surface supérieure de la deuxième partie 8a, 8b formant prolongateur sont sensiblement planes.

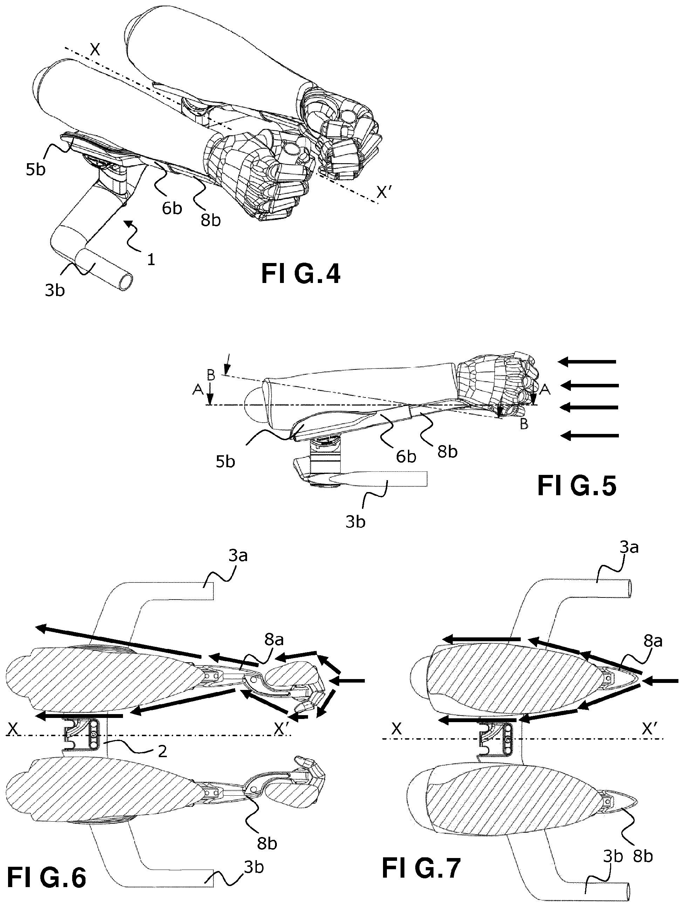

Dans le mode de réalisation préféré représenté, pour chacun des deux dispositifs 4a, 4b prolongateurs, la surface supérieure de la première partie 5a, 5b et la surface supérieure de la deuxième partie 8a, 8b formant prolongateur sont concaves, ce qui permet d'épouser au mieux la forme d'un avant-bras sur une grande partie voire sur toute sa longueur, comme tout particulièrement visible sur les figures 4 et 5. Il en résulte un confort amélioré et un maintien parfait des avant-bras.

Par ailleurs, pour chacun des deux dispositifs 4a, 4b prolongateurs, la surface inférieure de la deuxième partie 8a, 8b formant prolongateur est de préférence sensiblement dans le prolongement de la surface inférieure de l'extension longitudinale associée 6a, 6b, la surface inférieure de la deuxième partie 8a, 8b formant prolongateur et la surface inférieure de l'extension longitudinale 6a, 6b étant avantageusement convexes pour former un sommet face au vent.

Dans le mode de réalisation représenté, et pour chacun des deux dispositifs 4a, 4b prolongateurs, la deuxième partie 8a, 8b formant prolongateur et l'extension longitudinale associée 6a, 6b ont des sections complémentaires, de préférence sensiblement triangulaires, comme particulièrement visible sur la figure 3 sur la zone 14 rajoutée en pointillés. Un tel choix de section offre au cycliste une possibilité de positionner ses avant-bras en contact sur une majeure partie de la longueur des dispositifs 4a, 4b prolongateurs et confère un aérodynamisme amélioré, comme visible par les flèches en trait plein ajoutées sur les figures 5, 6 et 7 qui illustrent le trajet suivi par le vent autour des avant-bras d'un cycliste lorsque le vélo roule.

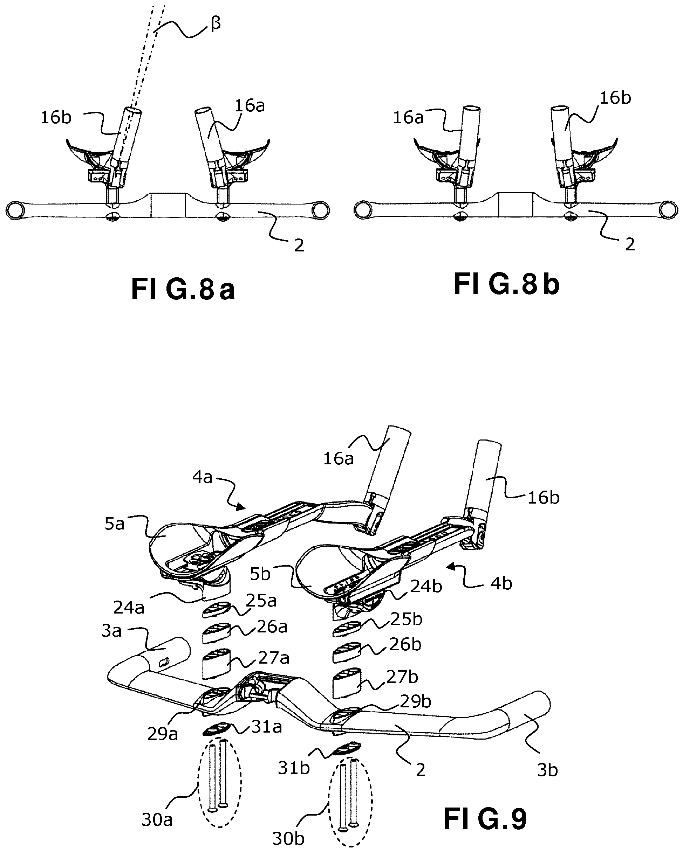

Les extrémités opposées au cintre 1 des parties 8a, 8b formant prolongateurs sont de préférence aplaties, inclinées vers l'intérieur par rapport à la verticale, et munies d'un trou traversant 15a, 15b (voir figure 1) permettant une fixation amovible de poignées 16a, 16b. Chaque poignée 16a, 16b est avantageusement montée pivotante de manière à permettre un réglage en inclinaison, par exemple par coopération d'un écrou 17 de serrage, d'une rondelle 18 d'appui et d'une vis 19 de serrage. Comme cela est visible notamment des figures 1, 8a et 8b, les poignées 16a, 16b ont un angle β de quelques degrés entre leurs pattes 20a, 20b de fixation en partie basse et la partie de prise en main. On peut ainsi retourner chaque poignée de 180° autour de son axe avant montage sur sa fixation ou bien, comme montré sur les figures 8a et 8b, intervertir les poignées 16a, 16b. Dans les deux cas, on obtient une modification de la position de pincement (inclinaison par rapport à la verticale) de ces poignées.

La zone aplatie des extrémités opposées au cintre 1 des parties 8a, 8b formant prolongateurs présente une forme ergonomique 21a, 21b sur laquelle la paume de la main du cycliste peut avantageusement se mettre en appui (voir notamment figures 1 et 2).

Dans le mode de réalisation préféré représenté sur les figures, la première partie 5a, 5b formant repose-bras de chacun des deux dispositifs 4a, 4b prolongateurs est configurée pour être fixée sur le cintre 1 de vélo par l'intermédiaire d'un système de réglage, dont un mode préféré, permettant un grand nombre de réglages (en plus du réglage du coulissement des parties formant prolongateurs relativement aux parties formant repose-bras, et de l'angle de pincement des poignées décrits ci-avant), va à présent être décrit.

Dans ce mode de réalisation, chaque système de réglage comporte (voir notamment figure 1) :
- une platine supérieure 22a, 22b se plaçant au montage sur chaque première partie 5a, 5b formant repose-bras ;
- un berceau 23a, 23b et un support 24a, 24b de berceau destinés à se placer au montage sous chaque première partie 5a, 5b en regard avec la platine supérieure 22a, 22b ;
- un jeu de plusieurs (dans l'exemple au moins trois) cales 25a, 26a, 27a ou 25b, 26b, 27b de hauteur variable, de préférence égale respectivement à 5 millimètres, 10 millimètres et 20 millimètres ;
- des vis 28a, 28b de serrage pour assembler la platine supérieure 22a, 22b, le berceau 23a, 23b et le support 24a, 24b de berceau à la partie 5a, 5b formant repose-bras.

Comme représenté sur la figure 1, et plus particulièrement visible sur la figure 9, les cales permettent à chaque cycliste de régler la hauteur de fixation de chacun des dispositifs 4a, 4b prolongateurs par rapport à la barre transversale 2 du cintre 1, au niveau de la première partie 5a, 5b formant repose-bras. Le choix des hauteurs variables de 5 millimètres, 10 millimètres et 20 millimètres permet avantageusement d'obtenir des hauteurs allant de 0 à 55 millimètres par pas de 5 millimètres, selon la combinaison utilisée de cales, en prévoyant pour chaque jeu de cales droite et gauche deux cales de 5 millimètres, deux cales de 10 millimètres, et quatre cales de 20 millimètres (à noter que les cales sont interchangeables et peuvent être utilisées soit sur le côté droit, soit sur le côté gauche). La vue représentée sur la figure 9 correspond à un réglage en hauteur de 35 millimètres avec l'utilisation combinée des trois cales 25a, 26a, 27a et 25b, 26b, 27b. Dans ce mode de réalisation, le système de réglage, et par suite les dispositifs prolongateurs associés, sont aptes à être fixés en deux zones 29a, 29b dédiées de la barre transversale 2 du cintre 1, de préférence au moyen de deux vis 30a, 30b de serrage des supports 24a, 24b de berceaux dont la longueur dépend du nombre de cales utilisées au montage, et d'une plaque d'appui 31a, 31b permettant de protéger le matériau du cintre 1.

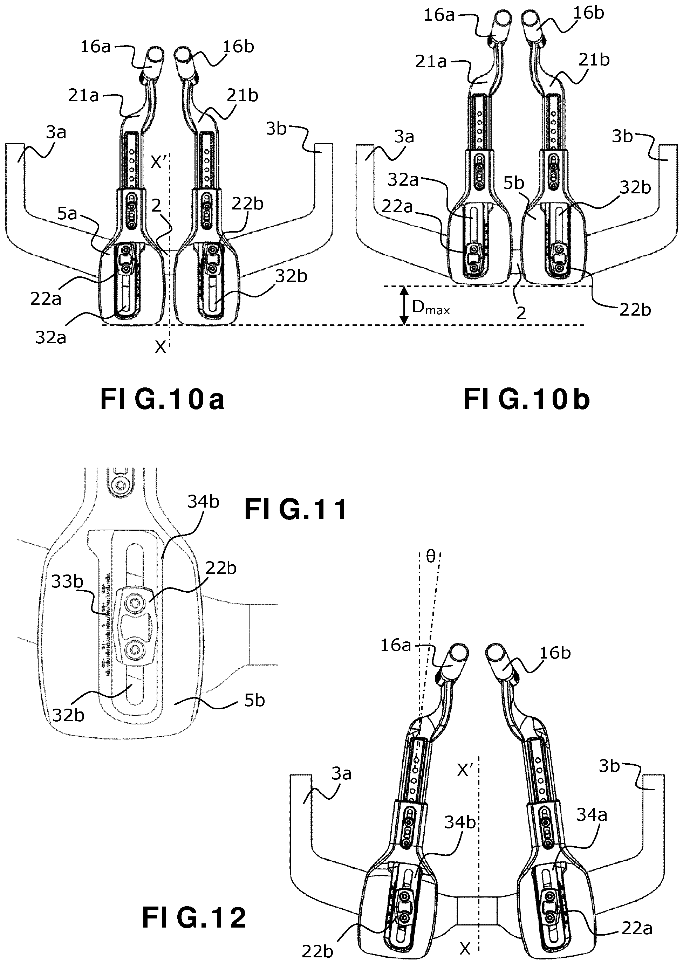

Comme représenté sur les figures 1, 10a, 10b et 11, l'assemblage de chaque platine supérieure 22a, 22b, du berceau 23a, 23b et du support 24a, 24b de berceau à la partie 5a, 5b formant repose-bras par l'intermédiaire des vis 28a, 28b de serrage s'effectue au travers d'une ouverture 32a, 32b de forme oblongue s'étendant longitudinalement dans la première partie 5a, 5b formant repose-bras. Chaque cycliste peut ainsi avancer ou reculer les parties 5a, 5b formant repose-bras selon un axe transverse à la barre 2 du cintre 1 en déplaçant l'assemblage longitudinalement dans l'ouverture oblongue 32a, 32b avant le serrage des vis 28a, 28b. Les figures 10a, 10b illustrent, en vue de dessus, deux positions extrêmes, une première position (figure 10a) dans laquelle les premières parties 5a, 5b sont globalement en retrait vers l'arrière de la barre transversale 2, et une deuxième position (figure 10a) dans laquelle les premières parties 5a, 5b sont globalement à l'avant de la barre transversale 2. Une plage totale Dₘₐₓ de réglage de translation avant/arrière, par exemple égale à 55 millimètres, peut ainsi être obtenue. La platine supérieure 22a, 22b peut avantageusement comporter un curseur pour se repérer sur une règle graduée (33a sur la figure 11), de manière à aider le cycliste dans le réglage en translation avant/arrière.

Comme représenté sur les figures 1, 11 et 12, l'ouverture 32a, 32b de forme oblongue s'étend longitudinalement dans un logement 34a, 34b de la première partie 5a, 5b formant repose-bras, ce logement 34a, 34b possédant avantageusement une taille de largeur supérieure à la largeur de la platine supérieure 22a, 22b. les deux dispositifs 4a, 4b prolongateurs peuvent ainsi pivoter autour des platines supérieures 22a, 22b qui servent de butées, ce qui permet à chaque cycliste de régler l'angle de pincement entre les deux dispositifs 4a, 4b prolongateurs (angle θ sur la figure 12), avant serrage des vis 28a, 28b de serrage. En dimensionnant correctement la largeur du logement 34a, 34b par rapport à la largeur de la platine supérieure 22a, 22b, une plage allant de -7° à +7° autour de l'axe longitudinal de l'ouverture oblongue 32a, 32b peut par exemple être obtenue pour l'angle de pincement θ.

Un réglage en translation gauche/droite (parallèlement à la barre transversale 2 du cintre 1) de chaque première partie 5a, 5b formant repose-bras par le système de réglage est également possible, comme cela va être à présent explicité :

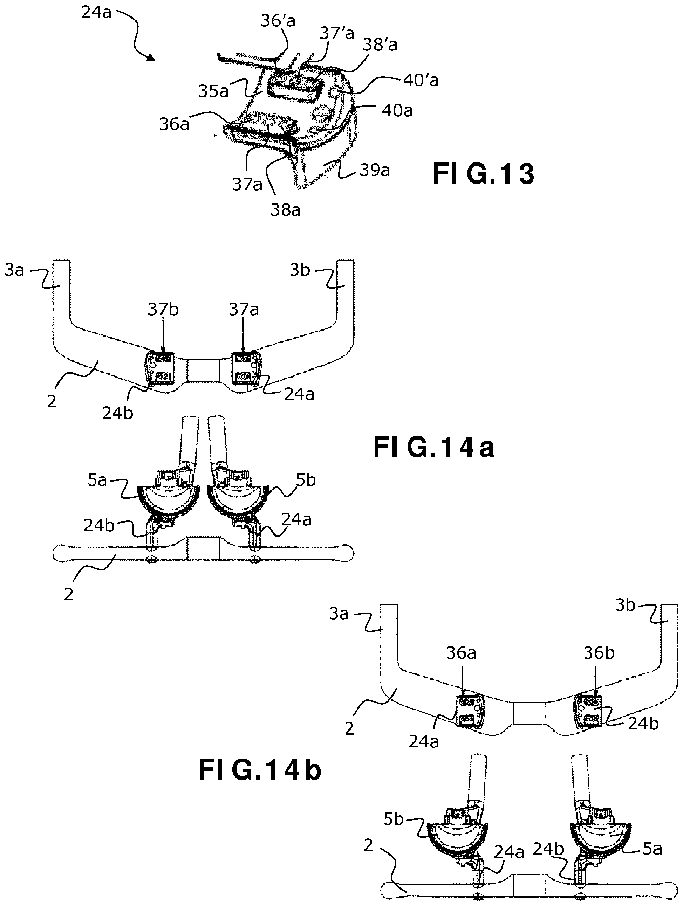

La figure 13 est une vue agrandie du support 24a de berceau de la figure 1. Le support 24a de berceau présente une forme générale de « L » majuscule inversé dont la base 35a est de forme concave pour coopérer avec la surface inférieure convexe du berceau associé, et est percée de deux séries parallèles de trous se faisant face et s'étendant le long de la base du « L » (parallèlement à la barre transversale 2 du cintre 1 après montage) pour former des paires acceptant les vis 28a de serrage. Plus précisément, on peut choisir de visser les vis 28a de serrage soit dans la paire de trous 36a, 36'a, soit dans la paire de trous 37a, 37'a, soit encore dans la paire de trous 38a, 38'a. L'autre branche 39a du « L » inversé est munie de deux autres orifices traversant 40a, 40'a aptes à recevoir les vis 30a de serrage (figures 1 et 9). Le support 24b de berceau est de constitution identique au support 24a de berceau. Comme visible sur la figure 1 néanmoins, le support 24a de berceau a sa base déportée vers la gauche (par rapport aux points de fixation par les vis 31a de serrage) alors que le support 24b de berceau a sa base déportée vers la droite. Les deux supports 24a et 24b sont avantageusement interchangeables entre les deux dispositifs 4a, 4b prolongateurs, de sorte qu'il est possible d'obtenir six positions possibles de fixation des premières parties 5a, 5b formant repose-bras pour un réglage en translation gauche/droite.

De plus, le logement 34a, 34b avec son ouverture de forme oblongue associée 32a, 32b s'étend parallèlement à l'axe longitudinal de la première partie 5a, 5b formant repose-bras, mais est également déporté par rapport à cet axe longitudinal (déport à gauche pour la partie 5a, et déport à droite pour la partie 5b). Les deux premières parties 5a, 5b sont avantageusement également interchangeables, à savoir que la première partie 5a peut être fixée au support 24a de berceau ou au support24b de berceau et la que la première partie 5b peut être fixée au support 24a de berceau ou au support 24b de berceau. Il résulte de l'interchangeabilité des deux supports 24a, 24b de berceau d'une part, et des deux premières parties 5a, 5b d'autre part la possibilité d'obtenir, dans le mode de réalisation préféré mais non limitatif, jusqu' à onze positions possibles de fixation des premières parties 5a, 5b formant repose-bras pour le réglage en translation gauche/droite (parallèlement à la barre transversale 2 du cintre après montage). Chaque cycliste peut ainsi trouver l'écartement entre les parties formant repose-bras qui correspond le mieux à sa morphologie. Dans le mode de réalisation préféré, l'écartement des centres des parties 5a, 5b (centre à centre) peut varier entre 97,5 millimètres et 205 millimètres par pas fonction de la distance entre les trous 36a, 37a, 38a (ou 36b, 37b, 38b) et le déport de chaque logement 34a, 34b par rapport à l'axe longitudinal de la partie 5a, 5b.

La figures 14a illustre, en vues de dessus et arrière du cintre, une première position du réglage de l'écartement correspondant à un écartement faible. Cette position d'écartement est obtenue d'une part en combinant, le support 24b de berceau avec déport à droite avec la première partie 5a formant repose-bras et en fixant cette combinaison à gauche sur la barre transversale 2 avec la paire de trous 37b, 37'b (seul le trou 37b est référencé pour ne pas surcharger la figure), et d'autre part en combinant, le support 24a de berceau avec déport à gauche avec la première partie 5b formant repose-bras et en fixant cette combinaison à droite sur la barre transversale 2 avec la paire de trous 37a, 37'a (seul le trou 37a est référencé pour ne pas surcharger la figure). La figures 14b illustre, en vues de dessus et arrière du cintre, une autre position du réglage de l'écartement correspondant à un écartement maximum. Cette position d'écartement maximum est obtenue d'une part en combinant, le support 24a de berceau avec déport à gauche avec la première partie 5b formant repose-bras et en fixant cette combinaison à gauche sur la barre transversale 2 avec la paire de trous 36a, 36'a (seul le trou 36a est référencé pour ne pas surcharger la figure), et d'autre part en combinant, le support 24b de berceau avec déport à droite avec la première partie 5a formant repose-bras et en fixant cette combinaison à droite sur la barre transversale 2 avec la paire de trous 36b, 36'b (seul le trou 36b est référencé pour ne pas surcharger la figure).

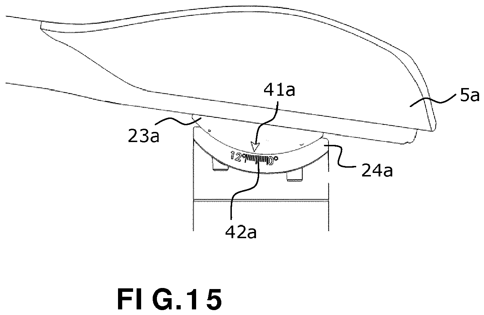

Le système de réglage permet en outre avantageusement un réglage en inclinaison de chaque première partie 5a, 5b formant repose-bras par rotation autour d'un axe sensiblement parallèle à l'axe longitudinal de la barre transversale 2. Comme visible sur la figure 15, ce réglage de l'angle d'appui des avant-bras est rendu possible par la coopération de la surface inférieure convexe du berceau 23a sur la surface supérieure de la base 35a du support 24a de berceau. Un repère 41a sur le berceau 23a en regard d'un marquage gradué 42a sur le support 24a de berceau permet avantageusement d'aider le cycliste dans ce réglage de l'angle d'appui des avant-bras. Dans le mode de réalisation préféré, l'angle d'inclinaison peut varier sur une plage allant de 0° à 12°.

Chaque système de réglage permet ainsi plusieurs réglages possibles pour la position de chaque première partie 5a, 5b formant repose-bras (et par conséquent de chaque dispositif 4a, 4b prolongateur), à savoir :
- un réglage par translation haut/bas permettant l'ajustement de la hauteur de chaque première partie 5a, 5b formant repose-bras par rapport à la barre transversale 2 du cintre 1 ;
- un réglage par translation avant/arrière selon l'axe XX' permettant l'ajustement de chaque première partie 5a, 5b formant repose-bras plus ou moins en retrait ou en avant de la barre transversale 2 du cintre 1 ;
- un réglage par translation gauche/droite permettant l'ajustement de l'écartement des premières parties 5a, 5b formant repose-bras le long de la barre transversale 2 du cintre 1 ;
- un réglage par rotation dans un plan horizontal permettant l'ajustement de l'angle de pincement θ entre les deux dispositifs 4a, 4b prolongateurs ;
- un réglage par rotation des berceaux dans les supports de berceau associés, permettant l'ajustement de l'angle d'appui des avant-bras par rapport à l'horizontale.

Bien entendu, des systèmes de réglage simplifiés n'offrant qu'une partie des possibilités de réglage ci-dessus peuvent être également envisagés.

D'autres modes de réalisation peuvent également être prévus pour certains réglages. Notamment, un système de fixation comportant une bague de fixation qui vient se clipper sur la barre transversale d'un cintre peut permettre d'ajuster à la fois l'écartement des dispositifs prolongateurs le long de la barre et l'angle d'appui des avant-bras.

## Revendications

1. Assemblage aérodynamique pour cintre de vélo, l'assemblage comportant deux dispositifs (4a, 4b) prolongateurs distincts formant un premier dispositif prolongateur gauche (4a) et un deuxième dispositif prolongateur droit (4b), **caractérisé en ce que** chacun des deux dispositifs (4a, 4b) prolongateurs comprend :
- une première partie (5a, 5b) formant repose-bras, apte à être fixée sur une barre transversale (2) d'un cintre (1) de vélo en s'étendant longitudinalement vers l'avant et comportant une extension longitudinale (6a, 6b) formant une portion d'extrémité libre, une surface supérieure de la première partie (5a, 5b) avec son extension longitudinale (6a, 6b) formant une surface d'accueil pour une partie d'avant-bras d'un cycliste ; et
- une deuxième partie (8a, 8b) formant prolongateur, apte à être fixée, de manière amovible et dans le prolongement de ladite première partie (5a, 5b), à ladite portion d'extrémité libre, la deuxième partie (8a, 8b) formant prolongateur étant apte à coulisser longitudinalement relativement à ladite extension longitudinale (6a, 6b) pour permettre un réglage d'une distance séparant une extrémité libre de la deuxième partie (8a, 8b) formant prolongateur de la première partie (5a, 5b) formant repose-bras.

2. Assemblage aérodynamique selon la revendication 1, **caractérisé en ce que**, pour chacun des deux dispositifs (4a, 4b) prolongateurs, une surface supérieure de la deuxième partie (8a, 8b) formant prolongateur est sensiblement dans le prolongement de la surface supérieure de la première partie (5a, 5b) de façon à augmenter longitudinalement la surface d'accueil pour chaque avant-bras d'un cycliste.

3. Assemblage aérodynamique selon la revendication 2, **caractérisé en ce que,** pour chacun des deux dispositifs (4a, 4b) prolongateurs, la surface supérieure de la première partie (5a, 5b) et la surface supérieure de la deuxième partie (8a, 8b) formant prolongateur sont sensiblement planes.

4. Assemblage aérodynamique selon la revendication 2, **caractérisé en ce que,** pour chacun des deux dispositifs (4a, 4b) prolongateurs, la surface supérieure de la première partie (5a, 5b) et la surface supérieure de la deuxième partie (8a, 8b) formant prolongateur sont concaves pour épouser la forme d'un avant-bras.

5. Assemblage aérodynamique selon l'une quelconque des revendications précédentes, **caractérisé en ce que,** pour chacun des deux dispositifs (4a, 4b) prolongateurs, une surface inférieure de la deuxième partie (8a, 8b) formant prolongateur est sensiblement dans le prolongement d'une surface inférieure de l'extension longitudinale (6a, 6b), **et en ce que** la surface inférieure de la deuxième partie (8a, 8b) formant prolongateur et la surface inférieure l'extension longitudinale (6a, 6b) sont convexes.

6. Assemblage aérodynamique selon l'une quelconque des revendications précédentes, **caractérisé en ce que,** pour chacun des deux dispositifs (4a, 4b) prolongateurs, la deuxième partie (8a, 8b) formant prolongateur et ladite extension longitudinale (6a, 6b) ont des sections complémentaires.

7. Assemblage aérodynamique selon la revendication 6, **caractérisé en ce que,** pour chacun des deux dispositifs (4a, 4b) prolongateurs, lesdites sections complémentaires (14) sont sensiblement triangulaires.

8. Assemblage aérodynamique selon l'une quelconque des revendications précédentes, **caractérisé en ce que,** pour chacun des deux dispositifs (4a, 4b) prolongateurs, la deuxième partie (8a, 8b) formant prolongateur est apte à être fixée et à coulisser longitudinalement à l'intérieur de ladite extension longitudinale (6a, 6b).

9. Assemblage aérodynamique selon l'une quelconque des revendications 1 à 7, **caractérisé en ce que,** pour chacun des deux dispositifs prolongateurs, la deuxième partie formant prolongateur est apte à être fixée et à coulisser longitudinalement sur l'extérieur de ladite extension longitudinale.

10. Assemblage aérodynamique selon l'une quelconque des revendications précédentes, **caractérisé en ce que,** pour chacun des deux dispositifs (4a, 4b) prolongateurs, la première partie (5a, 5b) formant repose-bras est configurée pour être fixée sur un cintre (1) de vélo par l'intermédiaire d'un système de réglage.

11. Assemblage aérodynamique selon la revendication 10, **caractérisé en ce que** chaque système de réglage est apte à effectuer au moins un réglage parmi les réglages suivants :
- un réglage par translation haut/bas permettant un ajustement de la hauteur de chaque première partie (5a, 5b) formant repose-bras par rapport à la barre transversale (2) du cintre (1);
- un réglage par translation avant/arrière permettant un ajustement de chaque première partie (5a, 5b) formant repose-bras plus ou moins en retrait ou en avant de la barre transversale (2) du cintre (1);
- un réglage par translation gauche/droite permettant un ajustement de l'écartement des premières parties (5a, 5b) formant repose-bras le long de la barre transversale (2) du cintre (1);
- un réglage par rotation dans un plan horizontal permettant l'ajustement d'un angle de pincement entre les deux dispositifs (4a, 4b) prolongateurs;
- un réglage par rotation permettant l'ajustement d'un angle d'appui des avant-bras par rapport à l'horizontale.

12. Assemblage aérodynamique selon l'une quelconque des revendications précédentes, **caractérisé en ce que** chacun des deux dispositifs (4a, 4b) prolongateurs comporte un revêtement (7a, 7b) en mousse apte à recouvrir de façon amovible la surface d'accueil.

13. Assemblage aérodynamique selon l'une quelconque des revendications précédentes, **caractérisé en ce que,** pour chacun des deux dispositifs (4a, 4b) prolongateurs, une extrémité de la deuxième partie (8a, 8b) formant prolongateur est aplatie et présente une forme ergonomique (21a, 21b) sur laquelle une paume de main d'un cycliste peut se mettre en appui.

14. Assemblage aérodynamique selon la revendication 13, **caractérisé en ce que** chaque extrémité aplatie est munie d'un trou traversant (15a, 15b) permettant une fixation amovible d'une poignée (16a, 16b).

15. Assemblage aérodynamique selon la revendication 14, **caractérisé en ce que** chaque poignée (16a, 16b) est montée pivotante.

16. Assemblage aérodynamique selon l'une quelconque des revendications 13 ou 14, **caractérisé en ce que** chaque poignée (16a, 16b) comporte une partie de prise en main et des pattes de fixation en partie basse, ladite partie de prise en main faisant un angle avec les pattes de fixation.

17. Assemblage aérodynamique selon la revendication 16, **caractérisé en ce que** les poignées (16a, 16b) sont interchangeables pour ajuster un angle de pincement entre ces poignées.

18. Cintre (1) de vélo, **caractérisé en ce qu'**il comporte deux dispositifs prolongateurs d'un assemblage aérodynamique selon l'une quelconque des revendications précédentes.

## Patentansprüche

1. Aerodynamische Anordnung für Fahrradlenker, wobei die Anordnung zwei verschiedene Verlängerungsvorrichtungen (4a, 4b) aufweist, die eine erste linke Verlängerungsvorrichtung (4a) und eine zweite rechte Verlängerungsvorrichtung (4b) bilden, **dadurch gekennzeichnet, dass** jede der zwei Verlängerungsvorrichtungen (4a, 4b) umfasst:
- einen ersten, eine Armauflage bildenden Teil (5a, 5b), der imstande ist, auf einer Querstrebe (2) eines Fahrradlenkers (1) befestigt zu sein, indem er sich längs nach vorn erstreckt und der eine Längserstreckung (6a, 6b) aufweist, die einen freien Endabschnitt bildet, wobei eine obere Fläche des ersten Teils (5a, 5b) mit seiner Längserstreckung (6a, 6b) eine Empfangsfläche für einen Teil eines Unterarms eines Radfahrers bildet; und
- einen zweiten, einen Verlängerer bildenden Teil (8a, 8b), der imstande ist, lösbar und in der Verlängerung des ersten Teils (5a, 5b) am freien Endabschnitt befestigt zu sein, wobei der zweite, einen Verlängerer bildenden Teil (8a, 8b) imstande ist, längs relativ zu der Längserstreckung (6a, 6b) zu gleiten, um eine Einstellung eines Abstands zu erlauben, der ein freies Ende des zweiten, einen Verlängerer bildenden Teils (8a, 8b) vom ersten, eine Armauflage bildenden Teil (5a, 5b) trennt.

2. Aerodynamische Anordnung nach Anspruch 1, **dadurch gekennzeichnet, dass** für jede der zwei Verlängerungsvorrichtungen (4a, 4b) eine obere Fläche des zweiten, einen Verlängerer bildenden Teils (8a, 8b) etwa in der Verlängerung der oberen Fläche des ersten Teils (5a, 5b) ist, so dass die Empfangsfläche für jeden Unterarm eines Radfahrers längs vergrößert wird.

3. Aerodynamische Anordnung nach Anspruch 2, **dadurch gekennzeichnet, dass** für jede der zwei Verlängerungsvorrichtungen (4a, 4b) die obere Fläche des ersten Teils (5a, 5b) und die obere Fläche des zweiten, einen Verlängerer bildenden Teils (8a, 8b) etwa eben sind.

4. Aerodynamische Anordnung nach Anspruch 2, **dadurch gekennzeichnet, dass** für jede der zwei Verlängerungsvorrichtungen (4a, 4b) die obere Fläche des ersten Teils (5a, 5b) und die obere Fläche des zweiten, einen Verlängerer bildenden Teils (8a, 8b) konkav sind, um sich an die Form eines Unterarms anzuschmiegen.

5. Aerodynamische Anordnung nach einem der vorangehenden Ansprüche, **dadurch gekennzeichnet, dass** für jede der zwei Verlängerungsvorrichtungen (4a, 4b) eine untere Fläche des zweiten, einen Verlängerer bildenden Teils (8a, 8b) etwa in der Verlängerung einer unteren Fläche der Längserstreckung (6a, 6b) ist und dass die untere Fläche des zweiten, einen Verlängerer bildenden Teils (8a, 8b) und die untere Fläche der Längserstreckung (6a, 6b) konvex sind.

6. Aerodynamische Anordnung nach einem der vorangehenden Ansprüche, **dadurch gekennzeichnet, dass** für jede der zwei Verlängerungsvorrichtungen (4a, 4b) der zweite, einen Verlängerer bildenden Teil (8a, 8b) und die Längserstreckung (6a, 6b) komplementäre Querschnitte haben.

7. Aerodynamische Anordnung nach Anspruch 6, **dadurch gekennzeichnet, dass** für jede der zwei Verlängerungsvorrichtungen (4a, 4b) die komplementären Querschnitte (14) etwa dreieckig sind.

8. Aerodynamische Anordnung nach einem der vorangehenden Ansprüche, **dadurch gekennzeichnet, dass** für jede der zwei Verlängerungsvorrichtungen (4a, 4b) der zweite, einen Verlängerer bildenden Teil (8a, 8b) imstande ist, längs innen in der Längserstreckung (6a, 6b) befestigt zu sein und zu gleiten.

9. Aerodynamische Anordnung nach einem der Ansprüche 1 bis 7, **dadurch gekennzeichnet, dass** für jede der zwei Verlängerungsvorrichtungen der zweite, einen Verlängerer bildende Teil imstande ist, längs außen auf der Längserstreckung befestigt zu sein und zu gleiten.

10. Aerodynamische Anordnung nach einem der vorangehenden Ansprüche, **dadurch gekennzeichnet, dass** für jede der zwei Verlängerungsvorrichtungen (4a, 4b) der erste, eine Armauflage bildende Teil (5a, 5b) ausgelegt ist, um auf einem Fahrradlenker (1) mittels eines Einstellsystems befestigt zu sein.

11. Aerodynamische Anordnung nach Anspruch 10, **dadurch gekennzeichnet, dass** jedes Einstellsystem imstande ist, mindestens eine Einstellung von den folgenden Einstellungen durchzuführen:
- eine Einstellung durch Verschieben nach oben/unten, die eine Anpassung der Höhe jedes ersten, eine Armauflage bildenden Teils (5a, 5b) in Bezug auf die Querstrebe (2) des Lenkers (1) erlaubt;
- eine Einstellung durch Verschieben nach vorn/hinten, die eine Anpassung jedes ersten, eine Armauflage bildenden Teils (5a, 5b) mehr oder weniger hinter oder vor der Querstrebe (2) des Lenkers (1) erlaubt;
- eine Einstellung durch Verschieben nach links/rechts, die eine Anpassung der Beabstandung der ersten, eine Armauflage bildenden Teile (5a, 5b) entlang der Querstrebe (2) des Lenkers (1) erlaubt;
- eine Einstellung durch Rotieren in einer horizontalen Ebene, die die Anpassung eines Klemmwinkels zwischen den zwei Verlängerungsvorrichtungen (4a, 4b) erlaubt;
- eine Einstellung durch Rotieren, die die Anpassung eines Abstützwinkels der Unterarme in Bezug auf die Horizontale erlaubt.

12. Aerodynamische Anordnung nach einem der vorangehenden Ansprüche, **dadurch gekennzeichnet, dass** jede der zwei Verlängerungsvorrichtungen (4a, 4b) eine Verkleidung (7a, 7b) aus Schaumstoff aufweist, die imstande ist, die Empfangsfläche lösbar zu bedecken.

13. Aerodynamische Anordnung nach einem der vorangehenden Ansprüche, **dadurch gekennzeichnet, dass** für jede der zwei Verlängerungsvorrichtungen (4a, 4b) ein Ende des zweiten, einen Verlängerer bildenden Teils (8a, 8b) abgeflacht ist und eine ergonomische Form (21a, 21b) aufweist, auf der sich ein Handteller eines Radfahrers abstützen kann.

14. Aerodynamische Anordnung nach Anspruch 13, **dadurch gekennzeichnet, dass** jedes abgeflachte Ende mit einem Durchgangsloch (15a, 15b) ausgestattet ist, das die lösbare Befestigung eines Griffs (16a, 16b) erlaubt.

15. Aerodynamische Anordnung nach Anspruch 14, **dadurch gekennzeichnet, dass** jeder Griff (16a, 16b) schwenkbar angebracht ist.

16. Aerodynamische Anordnung nach einem der Ansprüche 13 oder 14, **dadurch gekennzeichnet, dass** jeder Griff (16a, 16b) einen Teil zum Ergreifen mit der Hand und Befestigungsfüße im unteren Teil aufweist, wobei der Teil zum Ergreifen mit der Hand mit den Befestigungsfüßen einen Winkel bildet.

17. Aerodynamische Anordnung nach Anspruch 16, **dadurch gekennzeichnet, dass** die Griffe (16a, 16b) untereinander austauschbar sind, um einen Klemmwinkel zwischen diesen Griffen anzupassen.

18. Fahrradlenker (1), **dadurch gekennzeichnet, dass** er zwei Verlängerungsvorrichtungen einer aerodynamischen Anordnung nach einem der vorangehenden Ansprüche aufweist.

## Claims

1. An aerodynamic assembly for bicycle handlebars, the assembly including two separate extension devices (4a, 4b) forming a first left extension device (4a) and a second right extension device (4b), **characterized in that** each of the two extension devices (4a, 4b) comprises:
- a first part (5a, 5b) forming an armrest, able to be fastened on a transverse bar (2) of a bicycle handlebar (1) while extending longitudinally forward and including a longitudinal extension (6a, 6b) forming a free end portion, an upper surface of the first part (5a, 5b) with its longitudinal extension (6a, 6b) forming a receiving surface for a forearm portion of the cyclist; and
- a second extension-forming part (8a, 8b), able to be fixed, removably and in the extension of said first part (5a, 5b), to said free end portion, the second extension-forming part (8a, 8b) being able to slide longitudinally relative to said longitudinal extension (6a, 6b) in order to allow an adjustment of a distance separating a free end of the second extension-forming part (8a, 8b) from the first armrest-forming part (5a, 5b).

2. The aerodynamic assembly according to claim 1, **characterized in that,** for each of the two extension devices (4a, 4b), an upper surface of the second extension-forming part (8a, 8b) is substantially in the extension of the upper surface of the first part (5a, 5b) so as to longitudinally increase the receiving surface for each forearm of a cyclist.

3. The aerodynamic assembly according to claim 2, **characterized in that,** for each of the two extension devices (4a, 4b), the upper surface of the first part (5a, 5b) and the upper surface of the second extension-forming part (8a, 8b) are substantially planar.

4. The aerodynamic assembly according to claim 2, **characterized in that,** for each of the two extension devices (4a, 4b), the upper surface of the first part (5a, 5b) and the upper surface of the second extension-forming part (8a, 8b) are concave in order to marry the shape of a forearm.

5. The aerodynamic assembly according to any one of the preceding claims, **characterized in that,** for each of the two extension devices (4a, 4b), a lower surface of the second extension-forming part (8a, 8b) is substantially in the extension of a lower surface of the longitudinal extension (6a, 6b), **and in that** the lower surface of the second extension-forming part (8a, 8b) and the lower surface [of] the longitudinal extension (6a, 6b) are convex.

6. The aerodynamic assembly according to any one of the preceding claims, **characterized in that,** for each of the two extension devices (4a, 4b), the second extension-forming part (8a, 8b) and said longitudinal extension (6a, 6b) have complementary sections.

7. The aerodynamic assembly according to claim 6, **characterized in that,** for each of the two extension devices (4a, 4b), said complementary sections (14) are substantially triangular.

8. The aerodynamic assembly according to any one of the preceding claims, **characterized in that,** for each of the two extension devices (4a, 4b), the second extension-forming part (8a, 8b) is able to be fixed and to slide longitudinally inside said longitudinal extension (6a, 6b).

9. The aerodynamic assembly according to any one of claims 1 to 7, **characterized in that,** for each of the two extension devices, the second extension-forming part is able to be fixed and to slide longitudinally on the outside of said longitudinal extension.

10. The aerodynamic assembly according to any one of the preceding claims, **characterized in that,** for each of the two extension devices (4a, 4b), the first armrest-forming part (5a, 5b) is configured to be fixed on bicycle handlebars (1) by means of an adjusting system.

11. The aerodynamic assembly according to claim 10, **characterized in that** each adjusting system is able to perform at least one adjustment among the following adjustments:
- an adjustment by upward/downward translation allowing an adjustment of the height of each first armrest-forming part (5a, 5b) relative to the transverse bar (2) of the handlebars (1);
- an adjustment by front/back translation allowing an adjustment of each first armrest-forming part (5a, 5b) more or less toward the back or front of the transverse bar (2) of the handlebars (1);
- an adjustment by left/right translation allowing an adjustment of the separation of the first armrest-forming parts (5a, 5b) along the transverse bar (2) of the handlebars (1);
- an adjustment by rotation in a horizontal plane allowing the adjustment of a pinching angle between the two extension devices (4a, 4b);
- an adjustment by rotation allowing the adjustment of a bearing angle of the forearms relative to the horizontal.

12. The aerodynamic assembly according to any one of the preceding claims, **characterized in that** each of the two extension devices (4a, 4b) includes a foam covering (7a, 7b) able to removably cover the receiving surface.

13. The aerodynamic assembly according to any one of the preceding claims, **characterized in that,** for each of the two extension devices (4a, 4b), one end of the second extension-forming part (8a, 8b) is flattened and has an ergonomic shape (21a, 21b) on which the palm of a hand of a cyclist can bear.

14. The aerodynamic assembly according to claim 13, **characterized in that** each flattened end is provided with a through hole (15a, 15b) allowing removable fastening of a handle (16a, 16b).

15. The aerodynamic assembly according to claim 14, **characterized in that** each handle (16a, 16b) is mounted pivoting.

16. The aerodynamic assembly according to any one of claims 13 or 14, **characterized in that** each handle (16a, 16b) includes a gripping part and fastening tabs in the lower part, the gripping part forming an angle with the fastening tabs.

17. The aerodynamic assembly according to claim 16, **characterized in that** the handles (16a, 16b) are interchangeable in order to adjust a pinching angle between these handles.

18. Bicycle handlebars (1), **characterized in that** they include two extension devices of an aerodynamic assembly according to any one of the preceding claims.
